Europäisches Patentamt

European Patent Office

Office européen des brevets

(19)

(11) Publication number: **0 662 693 A1**

(12) **EUROPEAN PATENT APPLICATION published in accordance with Art. 158(3) EPC**

(21) Application number: **94914423.2**

(22) Date of filing: **09.05.94**

(86) International application number:
**PCT/ES94/00046**

(87) International publication number:
**WO 95/03611 (02.02.95 95/06)**

(51) Int. Cl.6: **G21B 1/00**

(30) Priority: **26.07.93 ES 9301665**

(43) Date of publication of application:
**12.07.95 Bulletin 95/28**

(84) Designated Contracting States:
**CH DE FR GB IT LI PT SE**

(71) Applicant: **Orellana Hurtado, Diego**
**Calle Antonio Machado No. 35 1ol**
**E-28035 Madrid (ES)**

(72) Inventor: **Orellana Hurtado, Diego**
**Calle Antonio Machado No. 35 1ol**
**E-28035 Madrid (ES)**

(54) **GENERATOR FOR NUCLEAR FUSION BY CENTRIPETAL COMPRESSION.**

(57) Generator for nuclear fusion by centripetal compression, which compresses a mass of deuterium between two electrodes of liquid mercury and using the technique of the centripetal compressors by the action of a centrifugal field of forces on a column of mercury, and provides for the compaction of the deuterium mass at a rate of $10^{23}$ atoms per cm$^3$. Its ionises the deuterium mass at its maximum compression. It applies to the resulting plasma three electromagnetic fields in the three spatial axes and initiates the fusion by inversion of the electric ionising field while increasing its value. The mercury electrodes moderate the rapid neutrons proceeding from the fusion, evaporate and limit the macroscopic elevation of the temperature. The mercury gives off its heat to the outside in a heat exchanger whose secondary of pressure water is immersed in the mercury. The water supply and steam output are provided through the rotation shaft of the generator. It has a cyclic and continuous operation. The power is regulated by adjusting the number of cycles or the fuel for each cycle.

SECTION A-A

FIG. 3

TECHICAL FIELD TO WHICH THE INVENTION RELATES: The invention relates to the production energy from heat of the nuclear fusion (mercury and water steam) and to the production electric energy.

BACKGROUND ART OF THE INVENTION: At the present time, the nuclear fusion is being researching by two main process:

a).- Fusion by electromagnetic confinement, which confines and condenses a plasma of deuterium and tritium, inside of the a toroidal electromagnetic bottle.The energy for geting nuclear fusion is being transfered by electromagnetic process.

b).- Fusion by inertial confinement, which reaches a very high number of particles by $cm^3$, making a little empty metal sphere and puting inside, a solid mixture of deuterium and tritium. The energy for geting nuclear fusion is being transfered by lasser ray or radiations

Not one of them have got enough solutions because the plasma is not stable, the efficiency is not favorable, the generation of the heat is not continuous, they need materials very resisting to high temperatures, they haven't an adequate control an the energy generated and they haven't finished a process for extracting of the heat generated.

Moreover the tritium is radiactive, therefore the contradiction of contamination and security on the ambient are present in this type of generators.

THEORETIC GROUNDWORK OF THE GENERATOR BY CENTRIPETAL COMPRESSION: The diameter of the nucleus of deuterium is $10^{-14}$ m. The strong nuclear force, for compact the nucleus, has its range around this nucleus At present time the range of the strong force is unknown but is shortest than $10^{-13}$ m. and before that two nucleus of deuterium are reaching the border of the strog forces, is necessary overcome the repulsion potential barrier from electric positives load of the nucleus. Said potential barrier has a value $10^{16}$ V/m on the border of the strong forces.

The groundwork of the Centripetal Generator, is to obtain on the little mass of payload (deuterium) a density of nucleus of $10^{23}$ by $cm^3$, by mechanics compression and electromagnetic confinement, a proximity of the said nucleus to two liquid electrodes (catode and earth) from $10^{-9}$ m. and at this moment, an application of the inversion polarity of the electric field which is ionizing the payload and increasing its value until 10000 kV. The electric field and the electromagnetic field, are working on the nucleus simultaneously, so that Lorenz Force on the nucleus, is throwing one against others and this permits to equalize the repulsion field and to get the nuclear fusion, for a few nucleus inside payload.

PARTS WHICH FORM THE GENERATOR: With the aid of drawing, I am going to describe the parts of Generator:

Sheet number 1/7; exterior sight of the Generator. (1)is a cylindroide superstructure. Its exterior wall is made by steel ferromagnetic sheets which are superpoused and preformed. Said steel ferromagnetic sheets are reinfoced with turnbuckles of steel and its numbers and thickness are calculated for support a pressure about of 50.000 $kp/cm^2$ , from action of the mercury column inside of the superstructure, with high angular aceleration because the cylindroide is turning between 1.500 to 2.000 r.p.m.(I'll call "w" to said angular velocity). The diameter of the cylindroide will be between 6 to 20 meters, it depends of the drawing criterions, calculates, performance and power output. The side of the interior wall of the cylindroide is re-covered by refractory ceramic.

Sheet number 2/7; interior sight of the Generator by section B-B from before drawing, (5)is the axle central turn, (6)are the cylinders wheel axles, (2)are the cylinder wheels and (4)are the cylinders. The cylinders wheels are turning solidarity with the superstructure with "w" angular velocity, moreover each cylinders wheel is turning on own axle. This movement is very slow and during said movement, the cylinders whells are partially submerged in the liquid mercury, (3)it is liquid mercury which turns solidarity with the cylindroide superstructure without relative movement among its particles. Therefore the centrifugal force from turns of the angular velocity, throws the liquid mercury against the interior wall of the cylindroide and is remaining free of mercury the center of the cylindroide. Said center forms a interior chamber (8), which is filled by deuterium. (7)Drawing a heating interchager, formed by a lot of the water pipes, submerged in the liquid mercury.

Sheet number 3/7; interior sight of the Generator by section A-A from before drawing, (9)is a concrete steel floating basement, leveled and made for suporting the weight of the superstructure and transmission on the ground the dynamics strongs, (10)is the concrete steel floating basement for the turn main electrical motor, (11)is a group of the water pumps which supply water to high pressure into the pipes of the heating interchanger, (12)is the interface between the fix part of pipes water (exterior of the Generator) and the turn part (interior of the Generator). It is only a water chamber inside of the botton of the main axle (which is hollow). The water, pushes from the water pumps, is ascending by the interior of the main axle (17) and reaches by (18) to the toroidal guides of the heating interchager , installed among the cylinders wheels. (13) Is the main electric motor for the turn of the superstructure.. This motor has its rotor winded and inundated and permits the regulation of velocity from exterior of Generator. By means of the variation of its velocity we are getting the variation of the pressure on payload (deuterium) from mercury and this is very interesting for the investigation. (15)Are the guide wheels for the turn of the superstructure, supported on the steel railway(14). The electric continous of the metalic mass of the turn system and the support on the ground, permits an electric earth connection from liquid mercury inside of the cylindroide superstructure ((3)of the sheet number 2/7). In (19) is loaded the deuterium by means of feeder pipe (26). In the same space is stored of helium from nuclear fusion between mercury and deuterium. Helium is the only waste product from Generator and the diferent density between mercury and deuterium, is used for extracting it from Generator, by means of siphon pipe which impedes, during the stop, the exit of mercury from Generator. A presostatic and thermostatic control (28) permits the regulation of the pressure and temperature inside of the deuterium chamber. (In function of the performance, the temperature could vary between 700 to 1100°K in the deuterium chamber), (23) and (24) are the interfaces which permits separate the fix parts to the turn parts for supplying deuterium and for extracting helium. (21) Is the axle of the cylinders wheels and (22) is the electric cylinders wheels motor, which turns very slowly. This motor turns between 0,05 and 5 r.p.m. (20) Are the trasnversal coils, which are producing an electromagnetic field, very strong and pulsanting inside of the payload (mean value 4 Tesla). Said transversal coils, are installed in the cylindroide superstructure. (31) Is the drawing of the feeders for supplying electric energy to Generator, by electric friction ring and electric brushes. (32) Is the drawing of the feeders for supplying electric energy to the transversal coils. (33) Is the drawing of the feeder for supplying electric energy to the main turning motor and (34) is the drawing of the feeders for supplying electric energy inside to the cylinders wheels, according to will be explained in the nex drawing sheet.

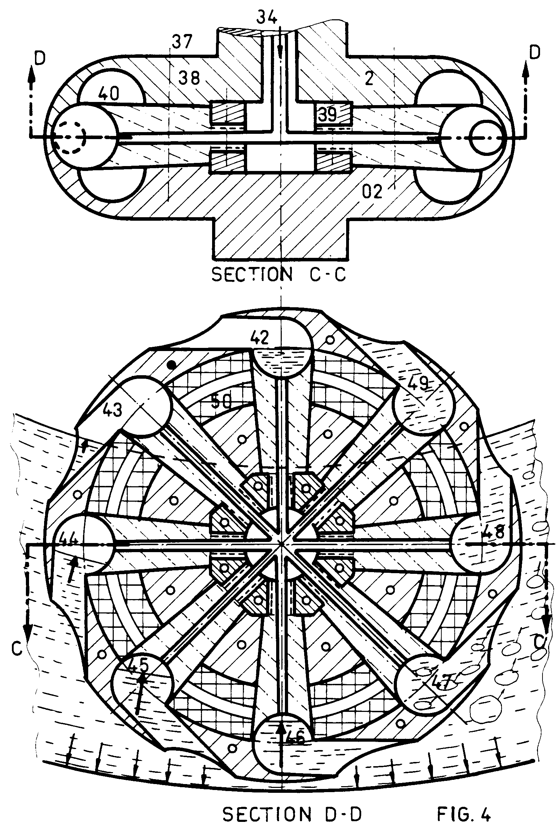

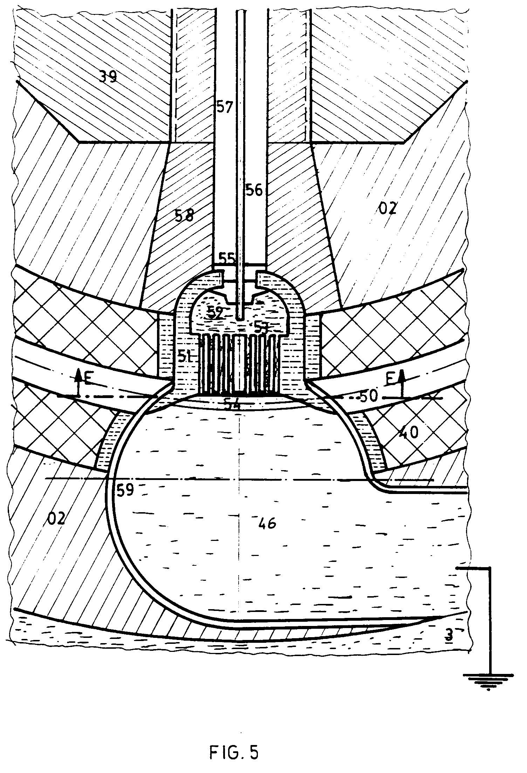

Sheet number 4/7; fig.4 interior sight of the cylinders wheel by the section C-C; fig.5 interior sight of the cylinders wheel by the section D-D. By the hollow axle of the said cylinders wheel several electric feeders are installed . One of them supplies electric energy for producing of an electric field for ionizing the payload, deuterium very denser other for the inversion polarity of the electric field which was ionizing, another supplies electric energy for a toroidal electromagnetic coil (this field is constant) in the cylinders wheel, other supplies electric energy for the spires of the part of the transversal coil in the cylinders wheel. (36)Is the octagono made of steel and support piece of the "Anvil". (41)Are the cylinders. Every cylinder is made in the perimeter of the cylinders wheel, it is a tangential empty and its interior wall is re-covered by refractary ceramic. The botton of the cylinder is a sphere, re-covered the same way. In said sphere will be done the fusion of the payload. (40)Are the coils for the electromagnetic toroidal field. (value about 1 Tesla).

With the help of section drawing D-D of the sheet 4/7, I am going to explain the funtioning of the cylinders wheel.

The cylinders wheel and the liquid mercury, turn with solidarity from left to right, with cylindroide superstructure and with high angular velocity "w" and only the cylinders wheel, turns very slowly, on own axle, from right to left. Therefore, cyclicaly, the cylinders are going into mercury and are going out from mercury. In (42), the mercury is pouring out from cylinders and sphere, by action of the centrifugal force field from "w" and the empty inside of the cylinder and sphere is occupied by deuterium (payload) from deuterium chamber (19). In (43) the mercury is compressing the payload, by action of the centrifugal force from "w", because the deuterium remains always inside of the cylinder on account of its smaller density and the mercury is flattened against the interior wall of the cylindroide. In (44) and (45) the compression on the payload from liquid mercury continues; said compression is done toward the center of the cylindroide superstructure, therefore is a centripetal compression. In (46) liquid mercury reaches the maximum compression on the payload. Said compression has a value of:

$$P = (1/2).w^2.(R^2 - r^2).\delta$$

without the terms with relation to gravity.(they aren't significants), "w" is angular velocity,"(R - r)" is the high of the mercury column on the payload and "δ" is the mercury density.

By this way, in only one step, is possible overcomes relation of compression on the payload of 1/50.000 without possibility of escapes, abrasion, erosion and with a very, very little mass of the payload. By this way is possible to reach $10^{23}$ particles of deuterium by $cm^3$.

In (46),they are electrodes with electric contact with some capillaries across the mercury chambers in the Anvil, (see the next drawing sheet) supply on the payload, an ionizing electric field (25 kV, d.c.and (-)). and an electromagnetic electric field which is the adding of the three electromagnetic fields. This electromagnetic fields are situated on the three axes of coordinates, the toroidal field (always constant), the transversal field (growing very quickly from starting of the ionizable current during 0,1 second) and the ring shaped field generated by the proper ionization electric current. Therefore the little bubble of deuterium (payload) has remained ionized and the particles with electric load inside plasma bubble are taking cyloidal trajectory and they are increasing its density because the electric loads of the plasma bubble (46) are treating annul the electric field which ionizes because the plasma bubble is a good electric conducting. Simultaneously, by effect of the growing electromagnetic field, the nucleus are being compacted and they are increasing adiabaticaly its temperature very quickly. This heating is not significant because the heat is transfered to the mercury which compresses the payload. There is a very high density of positive load, next to of the capillaries of mercury (negatives at this moment). This positive load or nucleus of deuterium, are turning (cycloidal trajectories) from the action of the adding of the electromagnetic field and from its very high density, some nucleus have an atomic distances among them, (mean about $10^{-10}$ meters),and next to the mercury negative capillaries, but this distance is not enough for getting the nuclear fusion. The nucleus have stored during the centripetal compression, a potential energy from action of the mercury and a kinecty energy from the action of the electromagnetic fields and the electric discharge for ionizing. The macroscopical temperature of the plasma bubble is stabilized about 1700°K because the mercury permits a very quickly transferance of the heat and it is permanently cooling from water pipes of the heating interchanger. This heating interchanger is calculated for that the macroscopical temperature of the mercury doesn't overcome said temperature in the points of the maximum pressure.

At this situation and moment, after 0,1 second from the ignition of ionizing, some capillaries are conected with a positive electric potential (10000 kV d.c. and (+)) during 0,0001 second). This POLARITY INVERSION of the ELECTRIC FIELD, changes the cycloidal trajectory of all the electric loads in the plasma bubble. The nucleus, inside payload, change its cycloidal desplacements. For this, the nucleus exit by its tangets to its own movement. Graphicaly is watched this effect (on plain) in drawing sheet n° 7/7, fig (8),(9) (ionizing) and fig (11),(12) (inversion polarity of electric field).A few nucleus which are situated on opposity diameters at the moment of the polarity inversion, exit by its tangents, they are on the same direction but with contrary movement. On said nucleus is performed by one way the repulsion force and by other way the Lorentz Force.

$$\mathbf{("F \ = \ q.(E \ + \ v \ x \ B)")}.$$

If the value of the

$$\mathbf{"E \ = \ -grd. \ V"},$$

is enough, Lorentz Force overcomes the repulsion force). For said value of the electric potential, and form of the Anvil plate and plasma bubble (and capillarie quality of the mercury), the Lorentz Force, balances the repulsion force. The high density of the payload and the energy level of it, permits the certainty from statistical thermodynamic that some nucleus have spatials condition and enough energy level, for reaching of the nuclear fusion at the same moment of the inversion polarity of the electric field which was ionizing. Can be observed that, from electric potential field, is transferenced on the payload the necessary energy for reaching of the nuclear fusion. This is mean that the transference as potential energy is more quickly than the transference as kinetic energy, therefore the nuclear fusion is starting before that the plasma bubble reaches very high temperature and this permits to satisfy the Lawson criterion. ((n.$\tau$> $10^{14}$ second/cm$^3$ ) where "n" es number of nucleus by cm$^3$ and "$\tau$" is the time of confinement of the energy. The efficiency of the fusion plasma depends of the mean time of collision, which is directly proportional to its density and inversely proportional to its temperature). The fusion of a few nucleus, is freeding enough energy which is transfered to the rest of the payload very dense at the first time and this permits the fusion of all nucleus inside payload.

At this moment, if the fusion payload has being done, all the ceramic mass, around payload, and full of mercury capillaries, is heating very very quickly. But the mercury in capillaries and fusion sphere, is evaporating to its critical temperature (1823 °K). This evaporation is taking at the first time, the energy from nuclear fusion and is limiting the macroscopical increase of the temperature and is protecting by this way, the interior wall of the sphere, anvil and cylinder. Simultaneously, the mercury steam from capillaries in Anvil, has only one exit across the fusion sphere and this produces a very strong push from capillaries to points very hot in sphere, like a douche of vapor, which is throwing the points very hot, from Anvil plate to inside the mass of liquid mercury. This effect is protecting the interior wall and is helping for evaporating of the mercury in hemisphere very quickly . But in (47) and (48) from the action of the centrifugal field, "w" (by different density between mercury steam and liquid mercury and the position of the fusion sphere), is throwing out from fusion sphere and cylinder, steam mercury which is pushing in the direction of the center of cylindroide superstructure, and said mercury steam is being replaced by liquid mercury which cooling the cylinder and fusion sphere. In the way from cylinder to center of the cylindroide, the mercury steam is retained by the pipes of the heating interchanger of pressure water, sumerged in the liquid mercury, which is cooling continually to said mercury steam and is condensing this vapor.Consequently the mercury steam is transformed in liquid mercury before that said mercury steam reaches the "surface", (liquid border of the deuterium chamber). In (49), by heating interchanger is cooling the piece called Anvil, (said heating interchanger is made by ring pipes and inside of them is circulating some water to high pressure (300 kg/cm2)).The heating interchanger is installed inside of the ceramic mass among the capillaries and said heating interchanger isn't drawn for better light of the drawing. The refrigerator of the capillaries and Anvil is condensing the mercury steam inside capillaries and from this condensation is produced an empty in the capillaries. The action of the centrifugal force "w" joined with said empty are refilling of liquid mercury the capillaries. In (42) the sphere and cylinder are ready for starting a new cycle of fusion.

The payload remains between two electrodes very near, during the ionization and during the inversion of the electric field which ionizes. The electrode with referential of potential "zero" is the mass of liquid mercury in fusion sphere, cylinder and cylindroide, that acrosses the metallic superstructure and support, is conected permanently with earth.

Sheet number 5/7, fig 5, is the section of the fusion sphere, at the moment of the maximum compression on deuterium from mercury. (51) is the Anvil, piece made from refractary ceramic, perforated by a lot of capillaries with direction to the radio of the cylinders wheel. This capillaries are conecting mercury chambers inside of the Anvil with fusion sphere. This chambers are filled of liquid mercury and supply liquid mercury to capillaries. This chambers are conected with metalic electrodes. Said electrodes are supplying from exterior of Generator, an electric field negative potential of 25 kV during 0,1 second for the ionizing of the payload and just after that an electric field with positive potential of 10000 kV during 0,0001 second. Said electric tension beats are controlled by digital system and switches solide state (tyristors). Between the Anvil plate and the mercury of the fusion sphere, remains the payload (deuterium bubble). (59) is the ceramic proteccion for the interior wall of the sphere and cylinder. (50) is the nucleus of the toroidal electromagnetic field. (40) is the coil of the toroidal electromagnetic field.(56) is the electric line for supplying electric energy to the electrode inside the deuterium chamber in Anvil. (57) is electric isolate of the said electric line in Anvil and its support.(58) is said support piece and base of the Anvil, made in refractary ceramic and cooling by heating interchager, the same way of the Anvil.

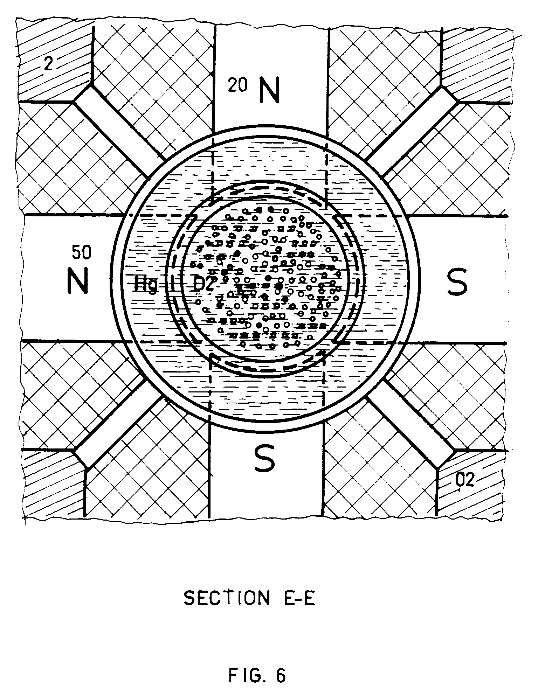

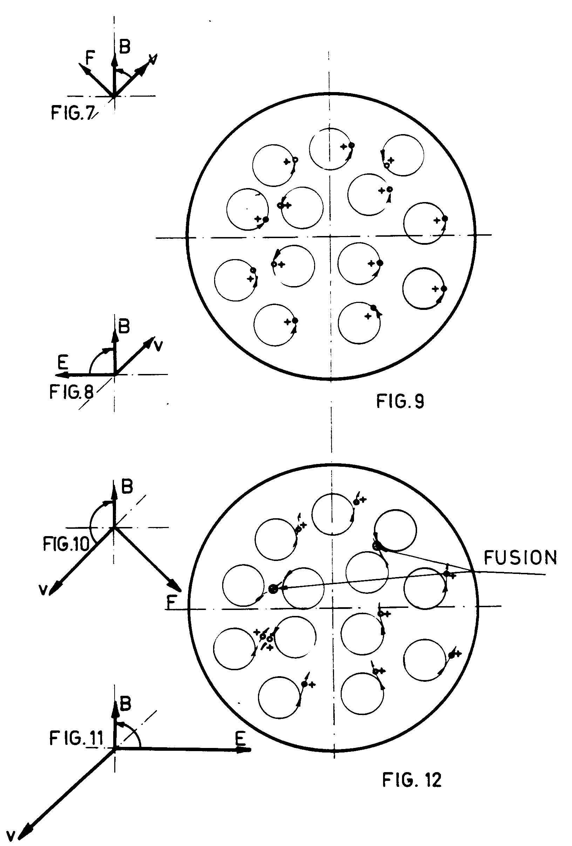

Sheet 6/7,fig 6 is the section E-E of the before sheet In this drawing we are watching the performace of the toroidal and transversal electromagnetic fields, which joinetly with the field from electric current for ionizing (between capillaries and mass of mercury in sphere) form the three electromagnetic fields, on the three coördinate axes. So are added its effects on the electric load inside of the payload, during the ionization and at the moment of the inversion polarity of the electric field which is ionizing. The adding of said three field, has other temporal dimension from the growing of the tranversal electromagnetic field (which induces electric current on the surface of the liquid mercury and this electric current is stabilezing the bubble plasma).

MODE OF FABRICATION: The principal body, of two symetrical pieces, is made by stell superpused sheet, with the necessary hollows for coupling of the nucleus of the transversal coils and the winded of said coils. The same way, in the principal body, there are empty spaces for coupling the cylinders wheels, main axle, secundary axles of the cylinders wheels, water feeders of the secondary of the heating interchanger and steam collector for the exit of the water vapor from heating interchanger. The principal body (cylindroide superstructure) has its interior wall, re-covered by refractary ceramic, which is installed on it, before of the other mechanism. The cylinders wheels, are made in smeltery and two peces, with the necessary hollows for coupling the toroidal coils, Anvil base, Anvil and octagono. The base of the cylindroide superstructure is a ring wheels and railway system on reinforced concrete, for all ring perimeter of the cylindroide superstructure.

The setting up is begun with the preparation of the ground, leveling the earth and building the reinforced concrete support for the base ring perimeter, building the support for the main turn motor and the interface of water feeder and exit of the helium. The feeder of deuterium is made by the axle of the cylindroide acroos of the vapor chamber and this produces a previous warning of the payload. The admission of deuterium and the exit of helium, are controlled by a system which maintains constant the pressure and temperature inside of the deuterium chamber.

The heating interchanger is made of steel pipes of little diameters which form an interior labyrinth, circulating the water from turn central axle to ring perimeter and the water vapor from ring perimeter to central axle. Said pipes labyrinth are filling almost all free space interior of the cylindroide superstructure among the cylinders wheels and including the space deuterium chamber.

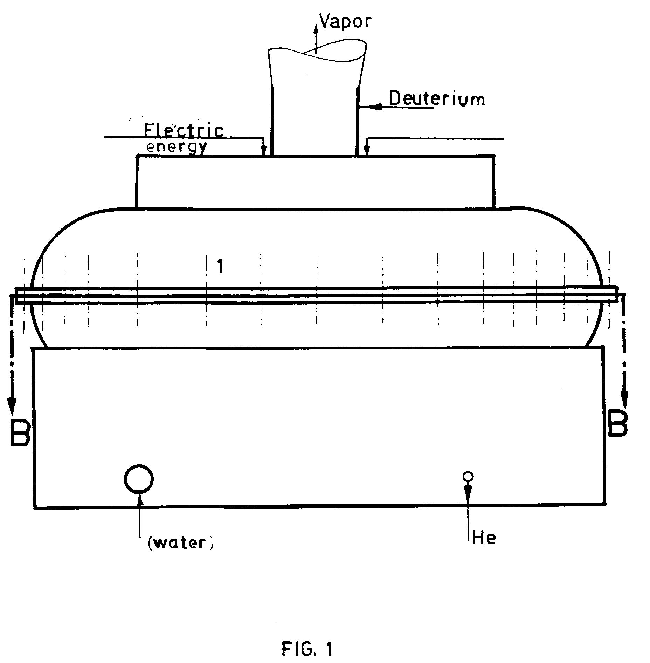

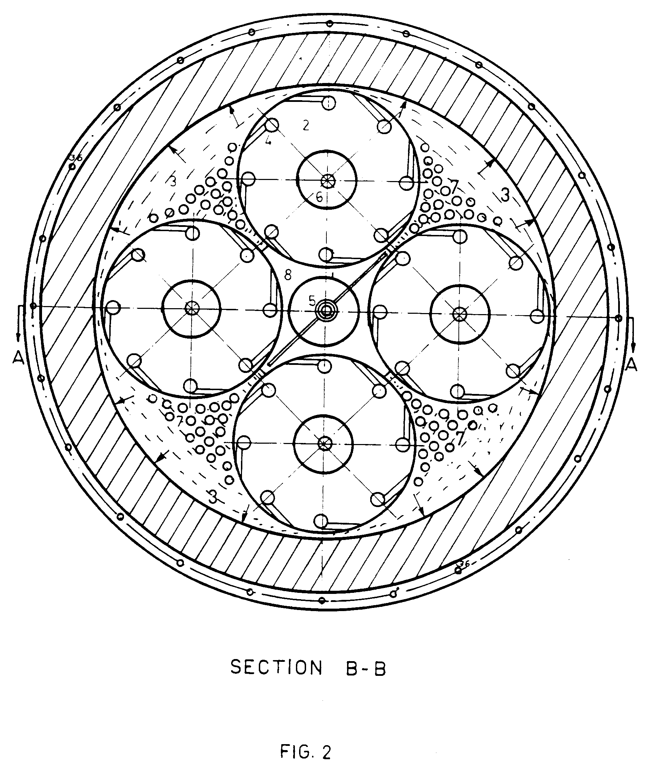

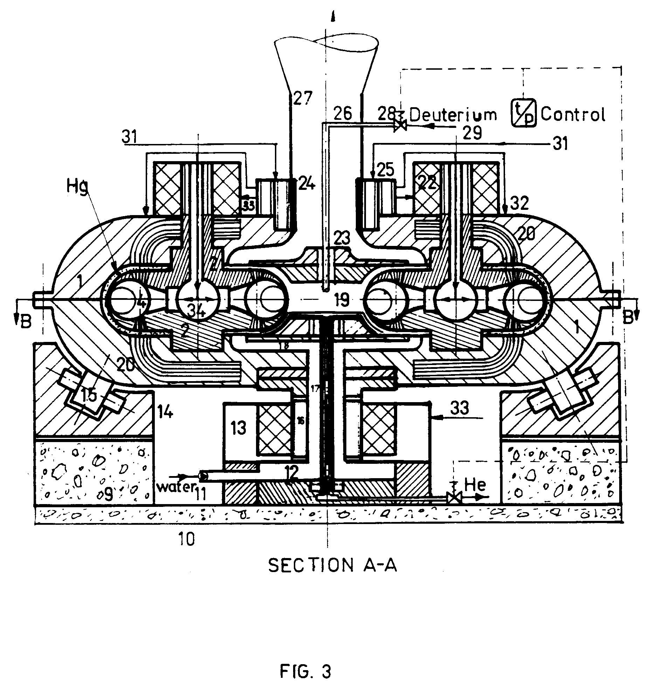

Prepared the reinforced concrete support and ring railway base, is installed the turn main motor on its concrete central base. To continuation is installed the bottom part of the supertructure, piece (02) of the drawing sheet number 3/7 fig. 3, which is supported by the ring wheels perimeter and is coupled, by means of the a rigid clutch with the axle of the main motor. Successively are installed by this order, the section of the transversal coils, which are gathering in the bottom part of the cylindroide superstructure, there are four, one for each cylinders wheel, water feeders of the heating interchanger and bottom parts of the cylinders wheels. To continuation is installed the octagono of the cylinders wheels, fastened by clamp screws in the bottom part of the cylinders whells, Anvil supports (threaded to the octagono) and Anvils which have conic base on its support. To continuation is injected liquid mercury to the capillaries and acroos them, are filled of mercury the interior chambers of the Anvil.

By the interior of the Anvil support is conduced (made in factory) electric wires for applicating electric field for ionizing and the inversion polarity of the electric field. Said electric wires are coneted acroos the empty space of the cylinders wheels axle with the friction rings for supplying electric energy from exterior of the Generator. The toroidal coils are installed in each cylinders wheel and is closed every one of said cylinders wheels, with the instalation of its top parts (by means of set screw, threaded to the bottom part), so that, when is coupled both parts of the cylinders wheel, are made the cylinders and fusion sphere from the joint of the hollows perform in both parts of the cylinders wheels and are fastened the Anvil and the toroidal coils. To continuation is completed the installation of the top part of the heating interchanger, is coupled the collector of the water vapor and the vapor chamber. Successively is closed the bottom parts with the top part of the cylindroide superstructure, with the instalation of the top part of the cylindroide (previously were installed in said top part, the sections of the transversal coils, which are completing this electromagnetic transversal coils), The cylindroide superstructure is fastened by set screws, threaded to its ring perimeter. On the superstructure are installed the electric motors of the cylinders wheels and are performed the electric conection and installed the friction electric rings for supplying the electric energy which is necessary for funtioning, and the fabrication of the Generator is finished.

At the first time, is necessary a test of the leakproof of heating interchanger and interior space of the cylindroide. To continuation is proved the funtionig of the electric feeders. Successively is balanced on empty the cylindroide superstructure, is verified the turning of the cylinders wheels and cylindroide. To continuation, with the Generator stopped, is supplyed liquid mercury acroos of the pipes for the extracting of helium, till is completed the neccessary load of mercury. During the supplying of liquid mercury, the air is expeled from Generator by the pipes for supplying deuterium, which are opened, at this moment, with the atmosphere. When the load of mercury is finished, is done the empty of the rest of air across the deuterium pipes, to continuation said deuterium pipes are coneted with the exterior chamber for supplying the deuterium. Starting the turn main motor, is proved the pressure from centrifugal field force on the mercury by means of the interior sounders and the correct fuctioning of the centripetal compression system. When all test are finished, the Generator is prepared for researching nuclear fusion energy by the Centripetal Compression System.

ADVANTAGES OF THE GENERATOR OF NUCLEAR FUSION BY CENTRIPETAL COMPRESSION:

1°.- The physical groundwork for ignition of nuclear fusion, from theorical analysis has sucessful demostration and permits exact calculation of the neccessary energy to use. The others nuclear fusion systems are using only kinectic energy for overcoming the electrostatic force field of nuclear repulsion and in the 30 last years they haven't obtained anything for one practice application. The continuous modification of the masses gravity center in fusion plasma, from relativist effects on the mass of some nucleus derived of its relativist velocities, impedes to stabilizes said fusion plasma "in levitation" among electromagnetic fields. The Generator of Centripetal Compression is transfering an energy from electric field potential and using Lorenzt Force for obtaining nuclear fusion and is balaced the potential repulsion energy with other potential energy, which produces contrary effects. This is the greatest contribution that Generator by Centripetal Compression realizes to the investigation of the nuclear fusion.

2°.- The heating interchanger system for captivating the energy from nuclear fusion by liquid metallic boiling and beams of pressure water pipes sumerged in said liquid. This tecnology is perfectly knowed at the present time and its utility is ratified.

3°.- Using deuterium, from nuclear reaction is obtained helium as final product, without radiactivite. The Generator could use tritium and reaches the ignition of nuclear fusion spending less energy than using only deuterium, but the contradiction of contamination and security on the ambient would be presenting. Using only deuterium said problems dissappier.

4°.- Broadly posibility for researching of all nuclear (fusion phenomenon, because the Generator permits the variation and control of a few parameters like pressure on the payload, density of nucleus, ionizing energy, electric field potential and electromagnetic field, by means of the interior and exterior control which are modified the turning of the main electric motor or the tension regulation system, without modification of any constructive element of the Generator.

5°.- Is more easy than other system, for starting and funtioning.

6°.- Is more easy than other system the control on power output, which is done by regulation of the pressure control of the deuterium chamber or the velocity regulation of the cylinders wheels.

7°.- Continuous and safety funtioning with only one movement, which is turning. Very easy the interruption of the fuctioning of Generator by means of stopping of the cylinders wheels or annuling the pulsanting electric tension fields.

8°.- The only known system which has complet solutions for obtaining energy from nuclear fusion so that is guaranty for investment. The heat from nuclear fusion has self-protection effects above the own mechanics by evaporation of the liquid metallic and this metallics steams are used for extractting the energy. Generator is using blanket of liquid mercury and though isn't capable of breeding tritium, is the best natural element as moderator of quickly neutrons.

POWER OUTPUT:

We can clasiffy the consumes of power from Generator by:

1°- Kinetic energy for starting of the cylindroide superstructure (turnig between 1500 to 2000 r.p.m.) and the creation of the electromagnetic toroidal fields. Said energy remains stored in the Generator, in the inertial mass of the cylindroide, $((1/2).I.w^2)$ and in the electromagnetic field, $(-(1/2).L.A^2)$ and will be recoverd at the stopped of the Generator (to exeption of the losses from frictional resistance).

2°.- Power transfered to the nucleus, for activating nuclear fusion. This power is used for compressing of the payload, for ionizing of the payload, for creating of the electromagnetic transversal field and for supplying of the electric power on the paiload, at the moment of the inversion of polarity of the electric field and increasing its value till 10000 kV, enough for the ignition of the nuclear fusion. The energy for compressing of the payload is not significative, at any way it is balanced at the moment of the becoming vapor from liquid mercury. The energy for creating of the transversal electromagnetic field, can be discharged to the font, when said electromagentic field is annuled at the moment of ignition of the nuclear fusion. The electric circuit for loading and disharging of the transversal coils are made by power circuit-breakers with power tyristors series-parallel and the power transmission system by coils and condensing with storage battery and rectifying and electric tense regulators system wich are compensating the loss for each power transmission.(instaled at the exterior to Generator in an electric power room). Is neccessary an exact control about the power for ionizing and inversion of polarity. So that, the pulses of ionizing (25 kV, during 0,1 second) and inversion polarity (10000 kV during 0,0001 second approximately) will be done by means of digital control and the more exactly as possible.

3°.- Power loss from entropy: There is loss of energy from frictioning on the turnig of cylindroide, relative movement between soild and liquid, electric and magnetic circuits (Joule effect, hysteresis...). The loss from frictioning on the turnig is not important The same way, the loss from movement between solid and liquid, because liquid mercury has extraordinaries kinetics viscosity and surface tension coefficients, which permits a very easy relative movement between surface of steel and mercury or vitrified ceramic surface and mercury. Liquid mercury is the best natural element for this work. Joule effect could be important if the intensity of the magnetic field was very high,(it is the problem in the tokamat). The Centripetal Generator uses three electromagnetic fields, on the same point, adding its effects and the intensity for each one is less than if only one electromagnetic field had the same effects done. So that, Centripetal Generator works without reaching the saturation of the magnetic nucleus and it permits reduce and finance the loss from Joule and hysteresis.

At synthesis, we can conclude that the neccessary power supplies for ignition nuclear fusion is fixed and is independent of the mass of deuterium by cicle and the power output depends on the mass of deuterium by cicle, which is depending on the pressure in deuterium chamber and the volumen of the cylinder and fusion sphere, therefore is neccessary to establish one compromise of minimum dimension for becoming vapor from liquid with the sufficient mass of mercury (to pressure of 50000 kp/cm$^2$) for captivating all energy from nuclear fusion by cicle and without damages in the Generator. From this mimimum dimension, the power output positive will be guaranteed.

**Claims**

1$^a$.- Generator of energy of nuclear fusion by Centripetal Compression, which produces an inertial confinement on a little mass of deuterium, inside a liquid metal (mercury), compacted to very high pressure, produces an ionization in said mass of deuterium very compacted between two electrodes of the liquid mercury, produces a magnetic confinement from one electromagnetic field which is increasing at the time very quickly and for starting the ignition of the nuclear fusion, is used the increasing of temperature from electric discharge, on the little mass of deuterium and the Lorentz Force from inversion polarity of the electric field, which is ionizing the little mass of deuterium.

The Generator has a cylindroide superstructure, turning horizontally on its own axle with high angular aceleration and inside it, there are the cylinders wheels, said cylinders wheels are turning solidary with the superstructure, there is heating interchangers solidary in superstructure with pressure water in its pipes and there is liquid mercury filling all the space among the cylinders wheels and heating interchangers, exept the center of the cylindroide. Said center is the deuterium chamber and is occupied by deuterium. The cylinders wheels, are situated inside of the perimeter of the cylindroide superstructure. The cylinders are made tangentialy in the perimeter of each cylinders wheel, and open by one of its extremes. The cylinders wheels are turing very slowly on its own axle, moreover are turning solidarity with superstructure. The cylinders, sequencely, are remained inside the mass of the liquid mercury and inside deuterium chamber. Said cylinders are being filled of deuterium when they remain in the deuterium chamber. Deuterium in the cylinders is being compressed by liquid mercury and from action of the centrifugal force field and the slow turning of the cylinders wheel. Said compression is done at direction of the center of the cylindroide superstructure (centripetal compression). During the compression the deuterium remains inside of the toroidal electromagnetic field. At the position of the maximum radius with relation of the center axle of the superstructure, the liquid mercury is doing the maximum compression on deuterium and against the spherical bottom of the cylinder.

Each cylinder is closing its spherical bottom with a piece made with refractary ceramic and called "Anvil". Said Anvil is drilled by a lot of very thin capillaries full of liquid mercury. The bubble of deuterium (payload) remains between a surface of liquid mercury by one of its sides and the said capillaries with its ceramic support (Anvil plate), by other side. The capillaries with multiple conexion, are conected electricaly, with the supply of energy and with the control room, they are both exterior of the cylindroide superstructure. Said conexion is made across the interior chests in cemaric pieces, which are filled of liquid mercury and metalic electrodes, which are conecting this "mercury chest", across of the empty axle of the cylinders wheel and the electric friction ring on the cylindroide, to the said external supply of energy. By external control, an electric discharge is done from external supply of energy, this electric discharge is ionizing the deuterium between capillaries (catode) and the mass of liquid mercury which is compressing said deuterium (the mass of liquid mercury is conected permanently to earth).

On the payload (plasma bubble from ionization of deuterium) are putting in action, simultaneously,three electromagnetic fields, the said toroidal electromagnetic field, a transversal electromagnetic field which is installed inside cylindroide superstructure and is closing on the payload and the electromagnetic field from ionizing electric current, On the payload is done an inversion of polarity of the electric field which is ionizing, from the inversion of polarity of the capillaries (negative by positive) and increasing its tension, instantaneously, the neccessary value for getting inside payload an electric field (- grd. V) equivalent to $10^{16}$ V/m., and this is producing the modification of the cycloidal movement of the load particles in payload, because instantaneously the tangential trajectory of this movement is changing . The load particles (deuterium nucleus with one positive load and electrons) are being pushed from Lorentz Force. The Generator is using an increasing instantaneously of temperature in the payload (from the very strong electric discharge which is derivated of the inversion of polarity and increasing the value of the electric field tension) and the Lorentz Force (from the inversion of the desplazament of the cycloidal trajectory when the tangencial movement the all nucleus changes at the moment of inversion of polarity of the electric field in capillaries) for reaching the nuclear fusion of the few nucleus of the payload, (electrothermonuclear fusion).

Process which is using the energy from nuclear fusion of the first nucleus for getting nuclear fusion of all nucleus inside the plasma bubble (payload).

Process which is protecting the mechanism from nuclear fusion energy by evaporation of liquid mercury in capillaries. Said evaporation is producing a vapor douche from capillaries to some very hot points in the fusion sphere. Said vapor douche is pushing this very hot points inside of the mass of liquid mercury and is separating them of the Anvil plate and interior walls of the fusion sphere. The capillaries lose mercury.

Process which is protecting the mechanism from nuclear fusion energy by evaporation of the liquid mercury in fusion sphere, cylinder and capillaries. The mercury steams are being pushing, by action of the centrifugal force field inside the cylindroide superstructure and liquid mercury more dense than mercury steams, from Anvil plate and fusion sphere to exterior of the cylinder. The liquid mercury is substituting, from Arquimedes push and different density, the mercury steam inside the fusion sphere, and said liquide mercury, by evaporation, continues the refrigeration of the bottom of the cylinder, Anvil plate and fusion sphere. The energy from nuclear fusion is being extracted from Generator to exterior by means of the condensation of mercury steams in heating interchangers, which get up the heat from mercury steams in a pipes circuit with pressure water, situated among cylinders wheels. For that is hollow the turning axle of the cylindroide superstructure and is supplying water by the bottom of said axle and is extracting water superheating steam by the top of said axle. Process by means of a beam pipes system inside the refractary ceramic, condenses the mercury steams inside the capillaries and from said condensation is done empty in capillaries and said empty joint the action of the centripetal force field refill the capillaries of mercury which was lost at the moment of ignition nuclear fusion. Its functioning is cycle and continuous and permits the control of the power output by means of modification of the pressure in deuterium chamber or modification of the turning velocity of the cylinders wheels.

2ª.- Generator of energy of nuclear fusion by Centripetal Compression as it's claimed in claim 1ª, which has a cylindroide body turning on its own axle with constant angular velocity and high angular aceleration. The Generator has an electric motor with winded and inundated rotor and with regulation of velocity from the exterior of Generator. It has in the center of its cylindroide morphology a combustible chamber (or deuterium chamber) and the cylinders wheels, which are installed around of the interior perimeter of the cylindroide. Said cylinders wheels are turning solidary with the cylindroide.

The Generator among the cylinders wheels has a heating interchangers with a lot of the water pipes which are conected with the toroidal comum colectors made in the body of the cylindroide superstructure. The water to high pressure is supplyed across of the interior axle of the cylindroide and by the bottom of the said axle. The water vapor is going out from Generator by the top of the said axle. The interfaces for conecting the Generator with the exterior are the water chamber (at the bottom of the main axle) and the steam chamber (at the top of said axle). The heating interchangers are using primary innundated system with liquid mercury and mercury steam , which is filling all the space among pipes of said heating interchanger, the interior wall of the cylindroide superstructure and cylinders wheels, except the center space which is ocuppied by deuterium. The cylindroide superstructure is turning on wheels and railway. Said railway is supported on a flotating base, made of concrete steel and with connection to erth of all metallic parts (railway and steel of the concrete base) by means of deep electrodes.

3ª.- Generator of energy of nuclear fusion by Centripetal Compression as it's claimed in claim 1ª and 2ª, having in the interior walls of the cylinders and cylindroide superstructure, a lamina of refractary ceramic which is re-covering said walls. This lamina is a thermic and electric isolate. In the bottom of each cylinder, there is a hemisphere which is supported on the ceramic piece said "Anvil". This "Anvil" is perforated by a lot of capillaries full of liquid mercury from interior chambers made in the support of the "Anvil". Said interior chambers, across of hollow axle of the cylinders wheels, have electric connection with the exterior of Generator for at adequated moments, by means of control devices (installed at interior and exterior of the Generator) can be applicated electric tensions (negatives or positives) to said capillaries.

4ª.- Generator of energy of nuclear fusion by Centripetal Compression as it's claimed in claim 1ª, 2ª and 3ª, which has in each cylinders wheel, a toroidal coil installed in the perimeter of said wheel. The electromagnetic toroidal field axis, is situated on the geometric center of deuterium bubble at the moment of the maximum compression. The electromagnetic toroidal field, is created on the starting of Generator, it is always activated and it is a constant field.

5ª.- Generator of energy of nuclear fusion by Centripetal Compression as it's claimed in claim 1ª, 2ª, 3ª and 4ª.

Process which has a transversal coil for every cylinders wheel, installed in cylindroide superstructure and closing its electromagnetic field across of the cylinders wheel. The center of the deuterium bubble is crossed by the axis of the electromagnetic transversal field at the moment of the maximum compression The electromagnetic transversal fields are activated by means of an external source of energy, at the instant of the ionizing of deuterium bubble and said time is coinciding with the maximum compression of the deuterium bubble. The activation of the transversal fields is pulsating and when said transversal fields are reaching its maximum of energy, they keep it in during a little fraction of second. To continuation this energy is discharged on parallel condensate battery, which is installed at the exterior of the Generator. The electric switch systems are made by means of inverse circuits of tyristors in bridge and circuits series-parallels from a room of the power electronic equipment, situated at the exterior of the Generator.

6ª.- Generator of energy of nuclear fusion by Centripetal Compression as it's claimed in claim 1ª, 2ª, 3ª, 4ª and 5ª.

Process which is using liquid mercury as piston for compressing a little mass of deuterium, taking said deuterium in the cylinder of the wheel by the side of low pressure of the centripetal compresser (combustible chamber), when the mercury and by action of the centrifugal force field, is ejected from cylinder, doing empty which is occupied by deuterium. It is using liquid mercury like emitting catode for ionizing electric field of the deuterium bubble very compressed and like attracting anode at the moment of the inversion of electric field which ionizes. It is using liquid mercury like electrode with zero potential of the electric field by electric conection with earth, for directing discharges of the electrons from emitting catode, during the ionization and for giving electrons at the moment of the inversion of the electric field. Using liquid mercury and subjected a very high pressure, like blanket or moderator of the quick neutrons from nuclear fusion, taking the energy of the said neutrons, so, the liquid mercury becomes in superheated mercury steam, that by effect of its less density are pushing out instantaneously from the fusion sphere and cylinders, (zone where nuclear fusion has been happened) and said superheated mercury steams are replaced by some liquid mercury, which becomes mercury steam again, cooling the interior wall of the cylinder and fusion sphere and securing phisicaly, the stability of the Generator. It's using superheat mercury steam for taking out the energy from nuclear fusion, by means of heating interchanger, performace by water pipes sumerged in mercury. It's liquid mercury at the first step for cooling of the ceramic anvil and capillaries, it becomes in superheated steam and said superheated steam mercury is using for separate the very hot points from nuclear fusion on the solid walls of the fusion sphere and plate of the anvil. Said very hot points, are introduced inside liquid mercury and mercury steam for generating and induced electric current from modifying the resultant of the electromagnetic field on the surfaces at contact with the plasma bubble. It's using mercury steam in movement among electromagnetic fields.

7ª.- Generator of energy of nuclear fusion by Centripetal Compression as its claimed in claim 1ª, 2ª, 3ª, 4ª, 5ª and 6ª.

Process which is extracting the helium from nuclear reaction by means of centrifugal force field, because the helium remains between mercury and deuterium inside the deuterium chamber, which permits getting out it for suction pipes and suction pump. Said suction pipes have a siphon which retains the mercury inside of Generator during the stopping.

The suction pump is simultaneously controlled with the deuterium load pump, temperature and pressure of the combustible chamber, by means of the adecuate system of regulation and control for pressure and temperature.

8ª.- Generator of energy of nuclear fusion by Centripetal Compression as it's claimed in claim 1ª, 2ª, 3ª, 4ª, 5ª, 6ª and 7ª. Process which permits to modify the parameters of analysis of several steps of an nuclear fusion research, like pressure on the plasma, nuclear mass by cycle, power output, etc., actuating on the velocity of the main motor for turning, actuating on the electric tension regulater, actuating on the velocity of turning of the cylinders wheel and actuating on the regulater of the pressure in the deuterium chamber.

9ª.- Generator of energy of nuclear fusion by Centripetal Compression as it's claimed in claim 1ª, 2ª, 3ª, 4ª, 5ª, 6ª and 7ª and 8ª. Process which realizes cyclicaly the nuclear fusion and realizes continuously the exit of vapor. Process which realizes the power output control, actuating on the parameters which are modifying the pressure in the deuterium chamber or on the parameters which are modifying the turning of the cylinders wheels.

FIG. 1

SECTION B-B

FIG. 2

SECTION A-A

FIG. 3

SECTION C-C

SECTION D-D  FIG. 4

FIG. 5

SECTION E-E

FIG. 6

FIG. 7

FIG. 8

FIG. 9

FIG. 10

FIG. 11

FIG. 12

FUSION

Inte.   .onal Application No

PCT/ES 94/00046

A. CLASSIFICATION OF SUBJECT MATTER
IPC 6    G21B1/00

According to International Patent Classification (IPC) or to both national classification and IPC

B. FIELDS SEARCHED

Minimum documentation searched (classification system followed by classification symbols)
IPC 6    G21B

Documentation searched other than minimum documentation to the extent that such documents are included in the fields searched

Electronic data base consulted during the international search (name of data base and, where practical, search terms used)

C. DOCUMENTS CONSIDERED TO BE RELEVANT

| Category* | Citation of document, with indication, where appropriate, of the relevant passages | Relevant to claim No. |
|---|---|---|
| A | US,A,4 333 796 (H.G. FLYNN) 8 June 1982<br>see the whole document<br>--- | 1 |
| A | US,A,4 140 057 (TURCHI ET AL.) 20 February 1979<br>see the whole document<br>--- | 1 |
| A | US,A,4 269 658 (T. OHKAWA) 26 May 1981<br>see the whole document<br>----- | 1 |

☐ Further documents are listed in the continuation of box C.

☒ Patent family members are listed in annex.

* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 26 August 1994 | 1 6. 09. 94 |

| Name and mailing address of the ISA | Authorized officer |
|---|---|
| European Patent Office, P.B. 5818 Patentlaan 2<br>NL - 2280 HV Rijswijk<br>Tel. (+31-70) 340-2040, Tx. 31 651 epo nl,<br>Fax (+31-70) 340-3016 | Capostagno, E |

Form PCT/ISA/210 (second sheet) (July 1992)

## INTERNATIONAL SEARCH REPORT

Information on patent family members

Inte.  onal Application No

PCT/ES 94/00046

| Patent document cited in search report | Publication date | Patent family member(s) | | Publication date |
|---|---|---|---|---|
| US-A-4333796 | 08-06-82 | US-A- | 4563341 | 07-01-86 |
| US-A-4140057 | 20-02-79 | NONE | | |
| US-A-4269658 | 26-05-81 | US-A- | 4305784 | 15-12-81 |

Form PCT/ISA/210 (patent family annex) (July 1992)